# EUROPÄISCHE PATENTSCHRIFT

(11) **EP 1 180 935 B1**
(45) Veröffentlichungstag und Bekanntmachung des Hinweises auf die Patenterteilung: **08.10.2003**
(21) Anmeldenummer: 00938700.2
(22) Anmeldetag: 29.05.2000
(51) Int. Cl.: A01N 47/26, A01N 47/14

(54) **DITHIOCARBAMAT-FLÜSSIGFORMULIERUNGEN**
DITHIOCARBAMATE LIQUID FORMULATIONS
FORMULATIONS LIQUIDES DE DITHIOCARBAMATE

(30) Priorität: 31.05.1999 DE 19924981
(43) Veröffentlichungstag der Anmeldung: 27.02.2002
(73) Patentinhaber: BASF AKTIENGESELLSCHAFT, 67056 Ludwigshafen (DE)
(72) Erfinder: KOBER, Reiner, D-67136 Fussgönheim (DE); KRÖHL, Thomas, D-55129 Mainz (DE); OETTER, Günter, D-67227 Frankenthal (DE); BORZYK, Oliver, D-67346 Speyer (DE); JÄGER, Karl-Friedrich, D-67117 Limburgerhof (DE); GROSJEAN, Olivier, D-68165 Mannheim (DE); FRICKE, Hans-Michael, D-67117 Limburgerhof (DE); VIZOSO-SANSANO, Sergi, D-67117 Limburgerhof (DE); ZIEGLER, Hans, D-67112 Mutterstadt (DE)
(74) Vertreter: Kinzebach, Werner, Dr.
(86) Internationale Anmeldenummer: EP0004887
(87) Internationale Veröffentlichungsnummer: WO00072681

(56) Entgegenhaltungen:
- EP-A- 0 243 872
- EP-A- 0 435 760
- GB-A- 903 382
- GB-A- 2 119 652
- DATABASE CAPLUS [Online] CHEMICAL ABSTRACTS SERVICE, COLUMBUS, OHIO, US; retrieved from STN-INTERNATIONAL, accession no. 1981:151919 CAPLUS XP002148846 & RO 68 170 A (CENTRUL DE CERCETARI PENTRU PROTECTIA PLANTELOR) 15. August 1980 (1980-08-15)
- DATABASE CAPLUS [Online] CHEMICAL ABSTRACTS SERVICE, COLUMBUS, OHIO, US; retrieved from STN-INTERNATIONAL, accession no. 1969:460110 CAPLUS XP002148847 & ZA 6 804 521 A (ESSO) 12. Februar 1968 (1968-02-12)

## Beschreibung

Die Erfindung betrifft im Wesentlichen wasserfreie Flüssigformulierungen mit Wirkstoffen aus der Klasse der Dithiocarbamate, insbesondere Metiram. "Im Wesentlichen wasserfrei" bedeutet im Rahmen der vorliegenden Erfindung, daß der Wassergehalt 0 bis 5 Gew.-%, insbesondere 0,1 bis 2,5 Gew.-% und vorteilhaft 0,1 bis 1 Gew.-% (jeweils bezogen auf das Gesamtgewicht der Flüssigformulierung) beträgt.

Thio- und Dithiocarbamate sowie EBTC's (Ethylen-bis-thiocarbamate) und EBDC's (Ethylen-bis-dithiocarbamate) sind allgemein als fungizide Wirkstoffe, insbesondere als Kontaktfungizide oder Biozide bekannt. Im einzelnen handelt es sich dabei um Wirkstoffe wie beispielsweise Metiram, Mancozeb, Maneb, Nabam oder etwa um die N,N-Dimethyl-thiocarbamate Thiram oder Ziram.

Ein besonderes Problem besteht bei diesen Wirkstoffen allerdings in ihrer vergleichsweise hohen Instabilität. Diese ist durch die geringe Stabilität der C-S-, S-S-Bindungen beziehungsweise der Thiocarbamat-Funktion, insbesondere bei niedrigen pH-Werten sowie gegenüber nucleophilen Agenzien, bedingt.

Eine Möglichkeit für stabile Formulierungen für den Pflanzenschutz liegt darin, die Stoffe im Rahmen von Feststoffformulierungen zu verarbeiten. Als feste Pulver-Formulierungen sind bei beispielsweise bekannt: Manzate 200 75 WG (Produkt der Firma DuPont), Polyram DF (Produkt der BASF AG) und Vondozeb 75 WG (Produkt der Fa. Elf Atochem).

Aus der DE-A 33 38 979 ist bekannt, Polyethylen-thiuram-disulfide mittels Formaldehyd oder Paraformaldehyd zu stabilisieren. Des weiteren beschreibt DE-A 34 26 078 die Stabilisierung von beispielsweise Zineb mittels Calciumoxid. Außerdem ist aus EP-A 0 568 378 bekannt, EBDC-Formulierungen in Form von wasserhaltigen Granulaten mit verbesserter Fließfähigkeit zu verwenden.

Besondere Aufmerksamkeit verdient bei derartigen Formulierungen wegen seiner hohen Toxizität das unerwünschte Abbau- beziehungsweise Nebenprodukt Ethylen-thiourea (ETU). Es ist wichtig, durch Stabilisierungsmaßnahmen den ETU-Gehalt unter definierte Schwellenwerte zu senken, z.B. mit Hydroxymethansulfinat (HMS) oder einem Salz davon, siehe EP-A-460 612.

Gegenüber den vorstehend erwähnten Feststoffformulierungen sind heutzutage vielfach Flüssigprodukte bevorzugt. Diese haben den Vorteil, daß sie auch unter ULV-(Ultra Low Volume) Bedingungen zusammen mit ölartigen Tankmix-Additiven, wie beispielsweise dem sogenannten Spraytex-Öl, einem Paraffin-Abkömmling (Produkt der Fa. Exxon), für eine Wasser-Öl- oder reine Öl-Applikation eine gute Mischverträglichkeit zeigen, siehe EP-A-435 760 und EP-A 697 171.

Derartige ULV-Bedingungen bzw. ULV-Öl-Wasser-Mischungen sind besonders für die Flugzeug-Applikation von Bedeutung. Durch den Einsatz von Flugzeugen ist es möglich, mit vergleichsweise niedrigen Aufwandmengen je Hektar etwa 10 bis 30 1 des fungiziden Wirkstoffs beziehungsweise der entsprechenden Formulierung wirkungssicher und abdriftarm zu applizieren. zielkulturen, die typischerweise für eine derartige Flugzeugapplikation von EBDC's in Frage kommen sind insbesondere die Banane sowie Kaffee. So werden praktisch alle Bananenplantagen mit Flugzeug- bzw. ULV-Applikation behandelt.

Bei einer derartigen Applikation sind insbesondere sogenannte Öl-SC-Varianten (SC = Suspensionskonzentrat) der Formulierungen vorteilhaft, da sie sich im Tankmix allgemein durch gute Mischverträglichkeit mit Sprayölen auszeichnen. Dabei verbessert der Ölanteil die Regenfestigkeit bei Anwendung der Formulierungen während der tropischen Regenzeit. In diesem Zusammenhang haben sich beispielsweise Öl-SC-Formulierungen mit dem Wirkstoff Mancozeb bewährt. Im Handel erhältliche Öl-SC-Formulierungen mit dem Wirkstoff Mancozeb sind beispielsweise Dithane 35 SC, Ridodur 35 SC (Produkt der Fa. Laquinsa), Vondozeb 35 SC (Produkt der Fa. Elf Atochem). Formulierungen dieser Art enthalten als Dispergiermittel häufig ein öllösliches Polymer, siehe US-A-3,131,119, US-3,773,976 und EP-A 875 142. Die EP-A 245 970 offenbart die Verwendung wasserlöslicher, nicht-ionischer Polymere, um die Regenfestigkeit der Formulierungen zu verbessern.

Auch bei diesen Formulierungen ist jedoch die Lagerstabilität noch unbefriedigend. Dies gilt insbesondere dann, wenn statt der relativ stabilen Wirkstoffe Mancozeb oder Maneb der weniger stabile Wirkstoff Metiram, der als Metallion Zn enthält, eingesetzt werden soll. Deshalb sind Flüssigformulierungen mit diesem Wirkstoff bislang nicht bekannt geworden. Durch den vergleichsweise höheren Zinkgehalt von Metiram gegenüber Mancozeb hätten jedoch Metiram-Öl-SC-Formulierungen Vorteile, da bekanntermaßen bereits auch einfache Zinksalze eine fungizide beziehungsweise biozide Wirkung aufweisen.

Auf der anderen Seite weisen die bekannten flüssigen EBTC-Öl-SC-Formulierungen noch weitere Nachteile auf. Zum einen ist im Vergleich zu den Festprodukten ihr Wirkstoffanteil niedriger. Dies liegt daran, daß bei Öl-SC-Formulierungen ausreichend niedrige Viskositäten im allgemeinen nur unterhalb eines Feststoff-Anteils von 40% erreicht werden. Ansonsten besteht die Gefahr, daß die Produkte bei zu hoher Viskosität nicht mehr ausreichend fließfähig sind.

Ein weiterer Nachteil der bisherigen Öl-SC-Formulierungen, insbesondere von Öl-SC-Formulierungen mit Wirkstoffen aus der Klasse der EBTC's, ist, daß derartige Formulierungen nach einer Lagerung oft nur unbefriedigende rheologische Eigenschaften besitzen. So kommt es oftmals bei der Lagerung bei höheren Temperaturen zu Agglomerationseffekten, Klumpenbildung oder starkem Absetzen der Feststoffphase. Teilweise sind die Effekte sogar irreversibel, d.h. auch bei erneuter Scherung, z.B. durch Rühren, gelingt es nicht, die Formulierungen wieder zu homogenisieren.

In RO 68170 A (vgl. Database Caplus [online] Chemical Abstracts Service, retrieved from STN-International accession No. 1981:151919) sind fungizide Formulierungen auf Basis von Zineb beschrieben. Diese Formulierungen enthalten Kupferoxychlorid, ein Mineralöl und ein Fettsäure-Calciumsalz oder einen Polyethylenglycolalkylphenylether.

ZA 6 804 521 A (vgl. Database Caplus [online] Chemical Abstracts Service, retrieved from STN-International accession No. 1969:460110) betrifft stabile, tixotrope, ölige Dispersionen auf Dithiocarbamat-Basis. Der dort beispielhaft angegebene Emulgator, nämlich Triton X-155, gehört zu den Polyethylenglycolalkylphenylethern.

In GB 2 119 652 A ist ein Verfahren zur Herstellung agrotechnischer Zubereitungen auf ölbasis beschrieben. So wird Zn-Bis-Isopropyldithiocarbamat mit einem Tensid vom Fettalkoholpolyglcolether-Typ formuliert.

Die fungiziden Zusammensetzungen der GB 903,382 A können Polyethylenglycolmonooleate enthalten.

Die EP 0 243 872 A betrifft unter anderem Dithiocarbamat-Formulierungen. Zu den dort genannten nichtionischen Tensiden gehören Fettalkohol-Alkoxylate oder alkoxylierte Alkylphenole.

Aufgabe der vorliegenden Erfindung war es deshalb, im Wesentlichen wasserfreie Flüssigformulierungen mit einem Wirkstoff aus der Klasse der Dithiocarbamate, insbesondere Metiram-haltige Flüssigformulierungen bereitzustellen, die einen hohen Wirkstoffanteil pro Liter, eine niedrige Viskosität sowie eine hohe Lagerstabilität aufweisen. Außerdem war es Aufgabe der Erfindung, ein Verfahren zur Bereitstellung derartiger im Wesentlichen wasserfreier Flüssigformulierungen zur Verfügung zu stellen.

Diese und weitere Aufgaben der Erfindung werden gemäß einem ersten Aspekt der Erfindung durch eine im Wesentlichen wasserfreie Flüssigformulierung gelöst, die umfasst:
a) 10 bis 70 Gew.-%, bevorzugt 30 bis 60 Gew.-% mindestens eines Wirkstoffs aus der Klasse der Dithiocarbamate,
b) 10 bis 89 Gew.-%, bevorzugt 20 bis 60 Gew.-% der erwähnten im Wesentlichen wasserfreien Ölphase,
c) 1 bis 40 Gew.-%, bevorzugt 5 bis 20 Gew.-% eines Produktes, das ausgewählt ist unter Polyhydroxystearinsäure, einem Derivat davon, einem Alkyl- beziehungsweise Alkenyl-polyoletheralkoxylat oder einem Gemisch davon,
d) 0 bis 40 Gew.-%, bevorzugt 0 bis 10 Gew.-% mindestens eines anionischen Tensids,
(jeweils bezogen auf das Gesamtgewicht der Formulierung).

Gemäß einem zweiten Aspekt der Erfindung wird eine im Wesentlichen wasserfreie Flüssigformulierung bereitgestellt, die umfasst:
a) 10 bis 70 Gew.-%, bevorzugt 30 bis 60 Gew.-%, wenigstens eines Wirkstoffs der nachfolgenden Formel I 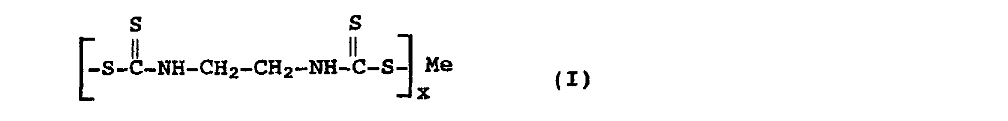 wobei Me = Zn, 1 ≤ x ≤ 5,
b) 10 bis 85 Gew.-%, bevorzugt 20 bis 60 Gew.-% einer weitgehend wasserfreien Ölphase,
c) 5 bis 40 Gew.-%, bevorzugt 7,5 bis 25 Gew.-%, mindestens eines anionischen Tensids, wobei das anionische Tensid c) ausgewählt ist aus
   ca) der Gruppe, bestehend aus Alkylsulfaten, Alkylsulfonaten, Alkylbenzolsulfaten, Alkylarylsulfonaten, Alkylpolyethoxysulfaten, Alkylphenolpolyethoxysulfaten und α-Olefinsulfonaten, wobei das Kation ein landwirtschaftlich nutzbares ein- oder zweiwertiges Kation ist,
   cb) Verbindungen der Gruppe der Mono- und/oder Di-C₆-C₃₀-alkylestersulfosuccinate, wobei das Kation ein landwirtschaftlich nutzbares ein- oder zweiwertiges Kation ist,
      und/oder
   cc) den anionischen Polymeren der nachfolgenden Formel (III) 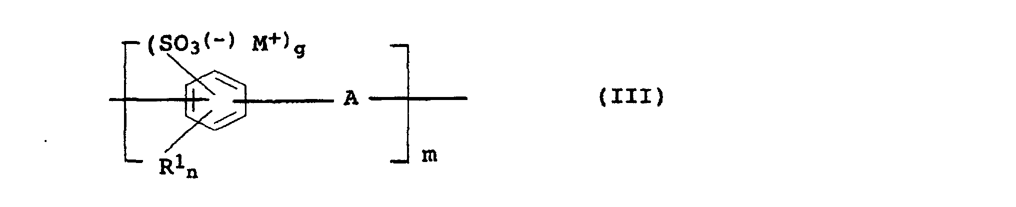 und/oder (IV) 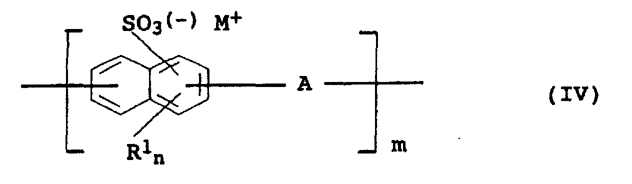
   wobei M ein landwirtschaftlich nutzbares ein- oder zweiwertiges Kation ist, g für 0 oder 1 steht, n eine ganze Zahl im Bereich 0 ≤ n ≤ 4, m eine ganze Zahl im Bereich 100 ≤ m ≤ 10⁵ und R¹ ein C₁- bis C₈-Alkylrest oder Hydroxylrest ist und A ein Methylen-, 1,1-Ethylen-, -CH₂-NH-CO-NH-CH₂- oder 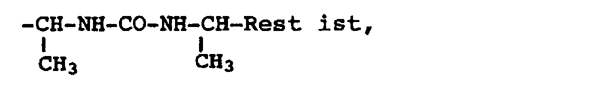
(jeweils bezogen auf das Gesamtgewicht der Formulierung).

Insbesondere liegt bei der vorstehend genannten Flüssigformulierung der Wert für x im Bereich von 3 bis 4.

Flüssigformulierung gemäß erstem Aspekt der Erfindung:

Zu den Dithiocarbamatwirkstoffen gehören auch die Thiuramsulfide. Bevorzugte Wirkstoffe sind Ziram (Zink-dimethyldithiocarbamat), Thiram (Tetramethylthiuramdisulfid) und Metham (Natrium-methyldithiocarbamat). Außerdem bevorzugt sind die Verbindungen der Formel (II), 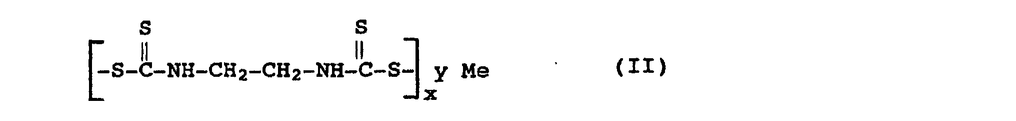 wobei:
Me ein ein- oder zweiwertiges landwirtschaftlich nutzbares Metallion ist, insbesondere ausgewählt aus Zn, Mn, Na, Mg, Ca und/oder K, bevorzugt Zn und/oder Mn, und 1 ≤ x ≤ 4, vorzugsweise 3 ≤ x ≤ 4, und y je nach Wertigkeit von Me für 1 oder 2 steht.

Insbesondere handelt es sich dabei um Maneb (Mangan-ethylenbisdithiocarbamat), Mancozeb (das Koordinationsprodukt von Maneb mit Zinkionen), Nabam (Natrium-ethylenbisdithiocarbamat), Zineb (Zink-ethylenbisdithiocarbamat) und bevorzugt Metiram ( Verbindung der Formel I mit x=3).

Bei der Komponente b) handelt es sich vorzugsweise um ein aprotisches Lösungsmittel und insbesondere um mindestens einen der folgenden Bestandteile:
ba) einen C₈- bis C₃₀-Kohlenwasserstoff der n- oder iso-Alkan-Reihe oder ein Gemisch davon. Beispiele für derartige Kohlenwasserstoffe sind n-und iso-Octan, -Decan, -Hexadecan, -Octadecan, -Eicosan, und vorzugsweise Kohlenwasserstoffgemische, wie Paraffinöl (das in technischer Qualität bis zu etwa 5% Aromaten enthalten kann) und ein C₁₈-C₂₄-Gemisch, das unter der Bezeichnung Spraytex-Öl im Handel von der Fa. Exxon erhältlich ist.
bb) aromatische oder cycloaliphatische C₇- bis C₁₈-Kohlenwasserstoffverbindungen, oder ein Gemisch davon. Dazu gehören insbesondere aromatische oder cycloaliphatische Lösungsmittel aus der Alkyl-Aromatenreihe; die Verbindungen können unhydriert, teilhydriert oder vollständig hydriert sein. Zu derartigen Lösungsmitteln der Komponente bb) gehören insbesondere Mono-, Di- oder Trialkylbenzole, Mono-, Di-, Trialkylsubstituierte Tetraline und/oder Mono-, Di-, Tri- oder Tetraalkyl-substituierte Naphthaline (Alkyl steht vorzugsweise für C₁-C₆-Alkyl). Beispiele derartiger Lösungsmittel sind Toluol, o-, m-, p-Xylol, Ethylbenzol, Isopropylbenzol, tert.-Butylbenzol und Gemische, wie die unter der Bezeichnung Shellsol und Solvesso vertriebenen Produkte der Fa. Exxon, z.B. Solvesso 100, 150 und 200.
bc) einen aliphatischen Ester, der insbesondere ausgewählt ist aus der Gruppe, bestehend aus aliphatischen Estern, aromatisch-aliphatischen Estern, und natürlichen Fetten und Ölen und deren Derivaten und Gemischen davon. Geeignet sind Ester aliphatischer, gesättigter oder ungesättigter C₁-C₂₀-Mono- und C₂-C₂₀-Dicarbonsäuren mit C₁-C₂₀-Alkanolen und Phenyl-C₁-C₂₀-alkanolen, wobei die Gesamtzahl der Kohlenstoffatome mindestens 8 beträgt. Geeignet sind auch Ester aromatischer Mono- und Dicarbonsäuren, wie Benzoesäure und Phthalsäure, mit C₁-C₂₀-Alkanolen und Phenyl-C₁-C₂₀-alkanolen. Bevorzugt sind Methyloleat, Adipinsäure-di-n- und -isooctylester, Laurylsäureoctylester, 2-Ethylhexansäure-2-ethylhexylester, Ölsäuremethylester, Stearinsäure-n-butylester, Adipinsäure-di-n-butylester, Adipinsäure-di-n- und -isononylester, Rapsölmethyl- und -ethylester, Benzoesäure-n-butylester, Benzoesäurebenzylester, etc.

Zu den vorstehend erwähnten natürlichen bzw. naturbelassenen Fetten oder Ölen oder Derivaten davon (modifizierte natürliche Fette oder Öle) gehören z.B. Stoffe wie Sojaöl, Sonnenblumenöl, Rapsöl, Maisöl sowie deren Raffinate.

Die bevorzugte Komponente c) ist Poly-Hydroxystearinsäure, wobei es sich ganz bevorzugt um Poly-Hydroxystearinsäure mit 2 bis 10, besonders bevorzugt 3 bis 6 Monomereinheiten handelt. Ein Beispiel hierfür ist das im Handel erhältliche Solsperse 3000 (Fa. ICI).

Bevorzugte Derivate der Polyhydroxystearinsäure sind Umsetzungsprodukte mit Aminen. Zu derartigen Aminen gehören primäre und/oder sekundäre, lineare C₁- bis C₂₀ Alkylamine und/oder verzweigte C₃- bis C₂₀-Alkylamine, oder es kann sich um Mono- oder Dialkylamino-alkylen-dioligo- oder -polyamine handeln, wobei die Alkylengruppe 2 bis 4 Kohlenstoffatome und die Alkylgruppe 1 bis 4 Kohlenstoffatome aufweisen kann. Insbesondere ist das Hydroxystearinsäurederivat ein Umsetzungsprodukt der Polyhydroxystearinsäure mit einem Polyethylenimin oder einem Mono- oder Di-C₁-C₄-alkyl-amino-C₂-C₄-alkylenamin.

Beispiele sind Ethylendiamin, N,N-Diethylentriamin, Triethylentetramin, N,N-Dimethylaminoethylamin, N,N-Dimethylaminodiethylentriamin, N,N-Dimethylaminopropylamin, N,N-Dimethylaminodipropylentriamin sowie Polyethylenimine mit einem Molekulargewicht von größer als 500, welche gering oder hochverzweigt sein können.

Das Molverhältnis von freier Säurefunktion der Polyhydroxystearinsäure zu Amin beträgt besonders bevorzugt 1:5 bis 10:1, insbesondere 1:1 bis 5:1.

Die Umsetzungsprodukte der Polyhydroxystearinsäure können auch kationischen Charakter aufweisen, der durch quartäre Stickstoffatome zustande kommt. Für die Quaternisierung der Stickstoffatome kommen beispielsweise Alkylhalogenide oder Alkylsulfate, wie Dimethylsulfat, in Frage. Insbesondere können die Umsetzungsprodukte der Polyhydroxystearinsäure mit einem Polyethylenimin oder einem Mono- oder Di-C₁-C₄-alkyl-amino-C₂-C₄-alkylenamin mit einer C₁-C₄-Alkylgruppe quaternisiert sein.

Besonders bevorzugt sind die Umsetzungsprodukte von Polyhydroxystearinsäure mit Dimethylaminopropylamin, Dimethylaminoethylamin und/oder Polyethylenimin sowie die Quaternisierungsprodukte davon, z. B. die mit Dimethylsulfat quaternisierten Produkte. Beispiele dafür sind die im Handel erhältlichen Solsperse-Marken (Fa. ICI), insbesondere Solsperse 9.000, 13.000 und 17.000.

Der Alkyl- oder Alkenylrest in den Alkyl- beziehungsweise Alkenylpolyoletheralkoxylaten kann geradkettig oder verzweigt sein und weist im Allgemeinen 6 bis 30 C-Atome auf. Der Alkenylrest kann eine oder mehrere Doppelbindungen umfassen.

Die bevorzugten Alkyl- bzw. Alkenylpolyoletheralkoxylate sind dadurch erhältlich, daß man einen Alkohol, mit einer Kettenlänge von 6 bis 30, insbesondere von 8 bis 22 C-Atomen, der geradkettig oder verzweigt sein kann und mit oder ohne Doppelbindungen vorliegen kann, mit Epichlorhydrin und anschließend mit einem mehrwertigen Alkohol umsetzt, wie vorzugsweise Neopentylglycol oder Glycerin, und danach mit 1 bis 20 Mol Ethylenoxid (EO), Propylenoxid (PO), Butylenoxid (BO) oder Pentylenoxid alkoxyliert.

Bei der Herstellung der Alkyl- bzw. Alkenylpolyoletheralkoxylate können die Komponenten in einem beliebigem Verhältnis eingesetzt werden. Bevorzugt sind Alkylglycidether mit Kettenlängen von C₁₂-C₁₈, umgesetzt mit mehrwertigen Alkoholen wie Glycerin oder Neopentylglycol im Verhältnis 2:1 bis 1:3, und gegebenenfalls ethoxyliert mit 1 bis 20 Mol EO. Ganz besonders bevorzugt sind Umsetzungsprodukte von Alkylglycidethern mit Kettenlängen C₁₆-C₁₈, die mit Glycerin und/oder Neopentylglycol im Verhältnis 1:1 bis 1:2 umgesetzt und anschließend gegebenenfalls mit 0 bis 5 Einheiten EO ethoxyliert sind.

Ein typischer Vertreter der Stoffklasse der Fettalkylglycerinetherethoxylate ist Cremophor WO CE 5115 (CAS-Nr.: 104376-61-6); Produkt der BASF AG).

Wenn vorhanden, sind die Tenside d) in einer Menge von 0,1 bis 40 Gew.-%, insbesondere 5 bis 10 Gew.-%, enthalten.

Brauchbare anionische Tenside d) sind Seifen (Alkali/Erdalkali/Ammoniumsalze der Fettsäuren), beispielsweise Kaliumstearat, Alkylsulfate und deren Gemische, Alkylethersulfate, Alkylsulfonate, Alkali-, Erdalkali- und Ammoniumsalze von Arylsulfonsäuren sowie alkylsubstituierten Arylsulfonsäuren, Alkylbenzolsulfonsäuren, wie beispielsweise Lignin-, Phenolsulfonsäure, Naphthalin- und Dibutylnaphthalinsulfonsäure, oder Dodecylbenzolsulfonate, Alkylnaphthalinsulfonate, Alkylmethylestersulfonate, Acylglutamate, Mono- oder Dialkyl-bernsteinsäureestersulfonate, wie beispielsweise Na-Di-isooctyl-bernsteinsäureestersulfonat, Mono-/Diphosphorsäurealkylester, Sarkosinate, beispielsweise Ma-Lauroylsarkosinat, Taurate. Zu den anionischen Tensiden gehören des weiteren Kondensationsprodukte von sulfoniertem Naphthalin und Derivaten davon mit Formaldehyd, Kondensationsprodukte von Naphthalinsulfonsäuren, Phenol und/oder Phenolsulfonsäuren, mit Formaldehyd oder mit Formaldehyd und Harnstoff.

Bevorzugt sind die Sulfat- und Sulfonattenside.

Besonders bevorzugt ist die Komponente d) ausgewählt unter:
da) Alkylsulfaten, Alkylsulfonaten, Alkylbenzolsulfaten, Alkylarylsulfonaten, Alkylpolyethoxysulfaten, Alkylphenolpolyethoxysulfaten und α-Olefinsulfonaten. Der Alkyl- beziehungsweise α-Olefinrest weist insbesondere 6 bis 30, vorzugsweise 8 bis 22 C-Atome auf. Die Zahl der Ethoxyeinheiten liegt im Allgemeinen im Bereich von 1 bis 50, vorzugsweise 1 bis 25. Der Arylrest steht für Phenyl oder einen Naphthylrest, der mit ein, zwei oder drei, geraden oder insbesondere verzweigten C₁-C₁₂-Alkylresten substituiert ist. Das zugehörige Kation ist ein landwirtschaftlich nutzbares ein- oder zweiwertiges Kation, das bevorzugt ausgewählt ist unter Na, Ca, K, Mg und NH₄. Beispiele für die Tenside da) sind Natriumlaurylsulfat, Natriumlaurylethersulfat, Nonylphenolpolyethoxysulfat, Natrium-diisobutylnaphthylsulfonat, etc;
db) Verbindungen der Gruppe der Mono- und/oder Di-C₆-C₃₀-alkylestersulfosuccinate, wobei das Kation ein landwirtschaftlich nutzbares ein- oder zweiwertiges Kation ist, bevorzugt ausgewählt aus Na, Ca, K, Mg, Mn, Zn und NH₄. Bevorzugt ist Natrium-dioctylsulfosuccinat;
   und/oder
dc) den anionischen Polymeren der nachfolgenden Formel (III) 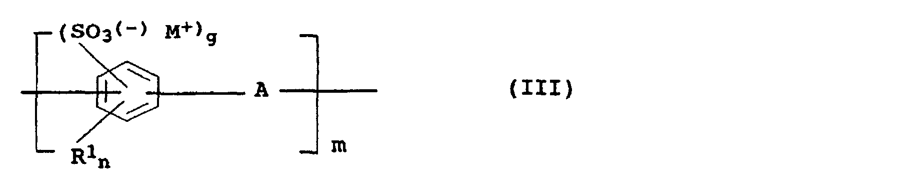 und/oder (IV) 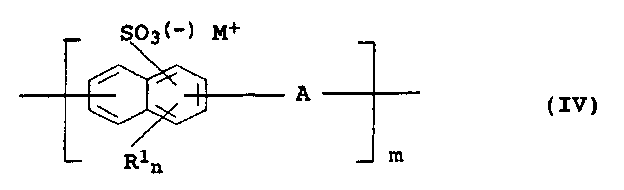
wobei M ein landwirtschaftlich nutzbares ein- oder zweiwertiges Kation, vorzugsweise Na, Ca, K, Mg oder NH₄, g für 0 oder 1 steht, n eine ganze Zahl im Bereich 0 ≤ n ≤ 4, m eine ganze Zahl im Bereich
10² ≤ m ≤ 10⁵, R¹ ein C₁- bis C₈-Alkylrest oder Hydroxylrest und A eine Gruppe, ausgewählt aus Methylen-, 1,1-Ethylen-, -CH₂-NH-CO-NH-CH₂- und 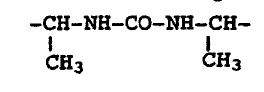 ist.

Produkte der Formeln III und IV sind unter der Bezeichnung Wettol oder Tamol im Handel von der BASF AG erhältlich.

Gemäß einer besonderen Ausführungsform der vorliegenden Erfindung umfassen Flüssigformulierungen
a) 10 bis 70 Gew.-% eines Wirkstoffs der Formel I 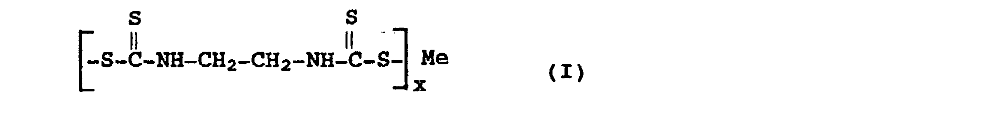 wobei Me = Zn, 1 ≤ x ≤ 5,
b) 10 bis 89 Gew.-% eines C₈-C₃₀-Kohlenwasserstoffes oder eines Gemisches davon,
c) 1 bis 40 Gew.-% Polyhydroxystearinsäure und/oder eines Umsetzungsproduktes der Polyhydroxystearinsäure mit einem Polyethylenimin oder einem Mono- oder Di-C₁-C₄-alkylamino-C₂-C₄-alkylenamin oder ein mit einer C₁-C₄-Alkylgruppe quaternisiertes Produkt davon, und
d) 0,5 bis 20 Gew.-% eines Alkylarylsulfonats oder eines anionischen Polymers dc).

Flüssigformulierung gemäß zweitem Aspekt der Erfindung:

Die Zusammensetzung der im Wesentlichen wasserfreien Ölphase entspricht derjenigen gemäß dem ersten Aspekt der Erfindung [Komponente b)].

Die Tenside c) entsprechen denjenigen gemäß dem ersten Aspekt der Erfindung (Komponente d)).

In den Formulierungen enthaltene Hilfsmittel:

Die Formulierungen sowohl gemäß dem ersten Aspekt der Erfindung als auch gemäß dem zweiten Aspekt der Erfindung können Hilfsmittel enthalten. Wenn enthalten, liegen sie in Konzentrationen von 0,1 bis 25 Gew.-%, bevorzugt 0,5 bis 15 Gew.-% vor, bezogen auf das Gesamtgewicht der Formulierung. Bei den Hilfsmitteln kann es sich um weitere anionische Komponenten und/oder kationische, zwitterionische oder nicht-ionische Tenside sowie um anionische, kationische oder nicht-ionische Polymere handeln.

Anionische Komponenten sind z.B. Eiweißhydrolysate sowie insbesondere Lignin-Sulfitablaugen und Methylcellulose (Dispergiermittel).

Zu den verwendbaren kationischen Tensiden gehören Alkyltrimethylammoniumhalogenide, Alkylpyridiniumhalogenide, Dialkyldimethylammoniumhalogenide.

Zu den nichtionischen Tensiden gehören
- Fettalkohol-polyoxyethylen-ester, beispielsweise Laurylalkohol-polyoxyethylenetheracetat,
- beziehungsweise Alkenyl
- alkoxylierte tierische und/oder pflanzliche Fette und/oder Öle, beispielsweise Maisölethoxylate, Rizinusölethoxylate, Talgfettethoxylate,
- Glycerinester, wie beispielsweise Glycerinmonostearat,
- Fettalkoholalkoxylate und Oxoalkoholalkoxylate vom Typ RO-(R₁O)ₓ(R₂O)_{y}R₃ mit R₁ und R₂ unabhängig voneinander = C₂H₄, C₃H₆, C₄H₈ und R₃ = H, oder C₁-C₁₂-Alkyl, R = C₃-C₃₀-Alkyl oder C₆-C₃₀-Alkenyl, x und y unabhängig voneinander 0 bis 50, wobei nicht beide für 0 stehen können, wie iso-Tridecylalkohol und oleylalkohol-polyoxyethylenether,
- Fettsäurealkoxylate, wie beispielsweise Ölsäureethoxylate,
- Alkylphenolalkoxylate, wie beispielsweise ethoxyliertes iso-Octyl-, Octyl- oder Nonyl-phenol, Tributylphenol-polyoxyethylenether,
- Fettaminalkoxylate, Fettsäureamid- und Fettsäurediethanolamidalkoxylate, insbesondere deren Ethoxylate,
- Zuckertenside, Sorbitester, wie beispielsweise Sorbitanfettsäureester (Sorbitanmonooleat, Sorbitantristearat), Polyoxyethylensorbitanfettsäureester, Alkylpolyglycoside, N-Alkylgluconamide,
- Alkylmethylsulfoxide,
- Alkyldimethylphosphinoxide, wie beispielsweise Tetradecyldimethylphosphinoxid.

Zu den zwitterionischen Tensiden gehören Sulfobetaine, Carboxybetaine, Alkyldimethylaminoxide, wie beispielsweise Tetradecyldimethylaminoxid.

Als verwendbare Hilfsstoffe einsetzbare Polymer-Tenside sind beispielsweise Di-, Tri- und Multi-Blockcopolymere vom Typ (AB)x-, ABA, BAB, wie beispielsweise Polyethylenoxid-block-polypropylenoxid-block-polyethylenoxid, Polystyrol-block-polyethylenoxid, AB-Kammpolymere, wie beispielsweise Poly(meth)acrylat-comb-polyethylenoxid.

Weitere einsetzbare Tenside sind beispielsweise Perfluortenside, Silicontenside, Phospholipide, wie beispielsweise Lecithin oder chemisch modifizierte Lecithine, Aminosäuretenside, wie beispielsweise N-Lauroylglutamat.

Des Weiteren können in den erfindungsgemäßen Flüssigformulierungen auch grenzflächenaktive Homo- und Copolymere als Hilfsstoffe eingesetzt werden: Zu diesen gehören beispielsweise Polyvinylpyrrolidon, Polyacrylsäure, Polyvinylalkohol, Polypropylenoxid, Polyethylenoxid, Maleinsäureanhydrid-Isobuten-Copolymere, Vinylpyrrolidon-Vinylacetat-Copolymere.

Die Alkylketten der vorstehend genannten Hilfsmittel können dabei linear oder verzweigt sein. Die Alkylkettenlängen liegen dabei im allgemeinen im Bereich zwischen 8 und 22 C-Atomen.

Besonders geeignet sind häufig Mischungen der Tenside. Die genannten Hilfsmittel können vor oder nach der Vermahlung zum wäßrigen Dithiocarbamat bzw. EBDC-SC-Vorprodukt oder zum Öl-SC Formulieransatz hinzugegeben werden.

Zur Verbreiterung des Wirkungsspektrums und zur Erzielung synergistischer Effekte können erfindungsgemäß Flüssigformulierungen mit zahlreichen Vertretern anderer fungizider Wirkstoffgruppen gemischt und dementsprechend auch gemeinsam ausgebracht werden. Beispielsweise kommen als Mischungspartner in Betracht: Morpholinverbindungen, wie Tridemorph, Fenpropimorph, Fenpropidin und Spiroxamin; Strobilurine, wie Azoxystrobin, Kresoximmethyl; Triazole, wie Tebuconazol, Flusilazol, Propiconazol, Fenbuconazol; Epoxiconazol; Benzimidazole, wie Carbendazim, Benomyl; Valinamide, wie Sprovalicarb oder KIF 230 der Fa. Kumiai; Thiophanate, wie Thiophanat-methyl, sowie Chlorthalonil. Diese Wirkstoffe können in die erfindungsgemäßen Formulierungen aufgenommen oder der Spritzbrühe zugesetzt werden.

Die Formulierung gemäß erstem Aspekt der Erfindung kann auch mit den anderen von der Formulierung gemäß zweitem Aspekt der Erfindung umfassten Wirkstoffen vermischt werden.

Von Interesse ist ferner die Mischbarkeit mit Mineralsalzlösungen, welche zur Behebung von Ernährungs- und Spurenelementmängeln eingesetzt werden. Es können auch nichtphytotoxische Öle und Ölkonzentrate sowie Antidriftreagenzien zugesetzt werden.

Die erfindungsgemäßen Formulierungen werden bevorzugt mit einem Verfahren hergestellt, bei dem man zunächst eine hochkonzentrierte (ca. 30 bis 60 Gew.-% Wirkstoff), wässrige mikropartikuläre Dispersion des Wirkstoffs, beispielsweise des Wirkstoffs Metiram, durch Vermahlen in Anwesenheit mindestens eines nichtionischen oder anionischen Tensids (z. B. die Komponente d) gemäß erstem Aspekt oder die Komponente c) gemäß zweitem Aspekt) herstellt und anschließend sprühtrocknet. Wenn für die Vermahlung ein anionisches Tensid d) oder c) zur Anwendung kommt, kann die vorgesehene Menge vollständig oder teilweise bei der Vermahlung eingesetzt werden.

Zur Herstellung der Formulierung gemäß erstem Aspekt der Erfindung wird das nach der Sprühtrocknung erhaltene Pulver oder Granulat mit der Ölkomponente b), der Komponente c) und gegebenenfalls dem restlichen oder gesamten anionischen Tensid und gegebenenfalls weiteren Hilfsmitteln und/oder Zusatzstoffen vermahlen bzw. verarbeitet.

Zur Herstellung der Formulierung gemäß zweitem Aspekt der Erfindung wird das Pulver oder Granulat in entsprechender Weise mit der Ölkomponente b) und dem restlichen oder gesamten anionischen Tensid c) und gegebenenfalls weiteren Hilfsmitteln und/oder Zusatzstoffen vermahlen bzw. verarbeitet.

Die für die Herstellung erforderlichen Maßnahmen und Apparate sind dem Fachmann geläufig.

Besonders vorteilhaft ist es, wenn die erfindungsgemäßen Formulierungen stabilisiert werden. Dies geschieht dadurch, daß man einem wäßrigen, technischen Wirkstoff-Vorkonzentrat vor der Sprühtrocknung 1 bis 5 Gew.-% eines Stabilisators (bezogen auf den Wirkstoffgehalt) zugibt.

Die Zugabe des Stabilisators erfolgt entweder während der Herstellung des wäßrigen SC's, d.h. der Vermahlung von technischem Wirkstoff, oder nach der Vermahlung, jedoch vor dem Schritt der Sprühtrocknung zum Zwischenprodukt DF (Dry Flowable).

Bevorzugte Stabilisatoren sind Formaldehyd, Paraformaldehyd oder Urotropin.

Die zusätzliche Stabilisierung mit Formaldehyd erfolgt im wesentlichen in Übereinstimmung mit dem bekannten Stand der Technik, s. DE-A 33 38 979.

Als weitere Stabilisatoren kommen - wie bereits teilweise vorstehend erwähnt - HMS, Calcium-Salze, beispielsweise Calciumoxid beziehungsweise Calciumcarbonat in Frage, s. EP-A-568 378 und 460 612.

Als Verdickungsmittel können die erfindungsgemäßen Öl-SC-Formulierungen des weiteren mineralische Bestandteile wie z.B. Bentonite, Talcite oder Hektorite enthalten, wodurch sich allgemein die physikalischen Eigenschaften der Formulierungen hinsichtlich geringerer Serumbildung oder geringerer Sedimentation verbessern können.

Ferner können derartige Zusätze auch meist als Folge von Viskositätserhöhungen auftretende chemische Prozesse in den Formulierungen bei der Lagerung unterdrücken, was zu verbesserter Wirkstoff-Stabilität führen kann. Als organische Verdickungsmittel kommen ferner z.B. Rizinusöl-Derivate in Betracht.

Die erfindungsgemäßen Flüssigformulierungen stellen ein Konzentrat dar, das den Wirkstoff mit einer mittleren Teilchengröße im Bereich von 0,1 bis 10 µm, vorzugsweise 0,5 bis 5 µm, enthält. Das Konzentrat wird zur Verwendung als Pflanzenschutzmittel in der Landwirtschaft (insbesondere für Bananen- und Kaffeepflanzungen) vor Gebrauch durch Verdünnen in üblicher Weise in eine zur Anwendung brauchbare Form überführt. Dabei ist insbesondere die Verwendung in Form einer Spritzbrühen-Zubereitung besonders bevorzugt.

Durch das Vorliegen einer praktisch wasserfreien Formulierung auf Öl-Basis wird auch eine Applikation im ULV-Verfahren (ultra low volume) ermöglicht, z. B. durch Flugzeug-Applikation.

Für eine übliche Tankmix-Spritzbrühe werden pro ha 0,5 bis 10, bevorzugt 1 bis 5 l, der erfindungsgemäßen Formulierung mit Wasser auf 5 bis 2.000 l verdünnt. Für eine ULV-Tankmixspritzbrühe werden pro ha 0,5 bis 10 l, vorzugsweise 1 bis 5 l, der erfindungsgemäßen Formulierung auf 5 bis 50 l mit einer Ölphase, bevorzugt einem Öl der Komponente b), oder mit Wasser oder einem Gemisch von Wasser und Öl im Volumenverhältnis von etwa 2:1 bis 4:1 verdünnt. Der Tankmix-Spritzbrühe werden gegebenenfalls 0,1 % bis 5 Gew.-% (bezogen auf Spritzbrühe) an weiteren anionischen, kationischen oder nicht-ionischen Tensiden, Hilfsmitteln, Polymeren und/oder den vorstehend genannten anderen fungiziden Wirkstoffen zugesetzt. Beispielhafte Stoffe für derartige Tenside und weitere Hilfsmittel sind vorstehend bereits beschrieben. Insbesondere sind Stärke und Stärkederivate, z.B. eine Carboxyl- und Sulfonsäuregruppen enthaltende Stärke (Nu-Film der Union Carbide Corp.) sowie Spreitmittel und Extender, wie Vapor Guard der Miller Chemical & Fertilizer Corp., zu nennen.

Die Erfindung wird durch die nachfolgenden Beispiele näher erläutert:

**Tab.1:**

| In den Beispielen verwendete Hilfsmittel und Wirkstoffe | | |
|---|---|---|
| Name | Strukturtyp/Einsatzstoff | Hersteller |
| Lutensol TO 3 | C₁₃-Oxoalkohol X 3 EO | BASF |
| Glycerox HE | Polyoxyethylenkokosfettsäureglycerinester | Croda |
| Glycerox L 8 | Glycerinmonolaurat x 8 EO | Croda |
| Alkamuls T/80 | Polyoxyethylensorbitanmonooleat | Rhodia |
| Emulan ELP | Rizinusöl x 11 EO | BASF |
| Emulan EL 36 | Rizinusöl x 36 EO | BASF |
| Emulan A | Ölsäure x 5,5 EO | BASF |
| Solutol HS 15 | 12-Hydroxystearinsäure x 15 EO | BASF |
| Atlas G 1086 | Polyoxyethylensorbitol-hepta-isostearat | Uniqema |
| Atlas G 1049 | Polyoxyethylensorbitol-hexa-oleat | Uniqema |
| Wettol NT 1 | Diisobutylnaphthyl-Na-sulfonat | BASF |
| Solsperse 3.000 | Polyhydroxystearinsäure (PHS) | ICI |
| Solsperse 9.000 | PHS + Dimethylaminoethylamin | ICI |
| Cremophor WO CE 5115 | Oleylglycerinetherethoxylat | BASF |
| Spraytex-01 | C₁₈-C₂₄-Kohlenwasserstoffgemisch | Exxon |
| Dithane | Mn-Ethylenbis(dithiocarbamat)-Komplex mit Zinksalz (Mancozeb) | Rohm & Haas |
| Dithane OS | Mancozeb-Öl-SC auf Basis von mind. 10 Gew.-% Paraffinöl | Rohm & Haas |
| Metiram | Verbindungen der Formel I mit x=3 | BASF |
| Vondozeb 33 OF | Mancozeb | Elf Atochem |
| Aerosol OT-A Surfactant | Dioctylnatriumsulfosuccinat in Erdöldestillat | Cytec Industries |

### Herstellungsbeispiele

Bei der Durchführung der hier wiedergegebenen Beispiele wurden die erfindungsgemäß verwendeten technischen Wirkstoffe zunächst mit Hilfsmittel wässrig vermahlen. Anschließend wurden die resultierenden wässrigen SC's (Suspensionskonzentrate) sprühgetrocknet und in einem dritten Schritt wasserfrei mit weiteren Hilfsmitteln zu den eigentlichen Öl-SCs erneut vermahlen.

Alternativ dazu kann auch durch eine einfache Vakuum-Trocknung unter leichter Erwärmung der Proben, wahlweise auch unter Atmosphärendruck im Luftstrom mit erwärmter Luft oder im Stickstoff-Gasstrom, der technische Wirkstoff von Wasser befreit werden. Dadurch entfällt der oben genannte Sprühtrocknungsschritt.

Als Mahlkörper verwendete man für wässrige oder wasserfreie SC's Glasmahlkörper oder andere mineralische oder metallische Mahlkörper in einer Größe von 0,1-30 mm, insbesondere 0,6-2 mm und zerkleinerte die Suspensionen in der Regel solange, bis eine mittlere Partikelgröße von deutlich kleiner als 10 µm erreicht wird.

Allgemein wurde in Kreisfahrweise, d.h. laufendes Umpumpen des SCs im Kreis, oder mittels Passagenfahrweise, d.h. komplettes und wiederholtes Durchpumpen beziehungsweise Durchfahren eines Öl-SC-Ansatzes, die Vermahlung durchgeführt.

Die Vermahlungen erfolgten z.B. in einer Dynomühle (Fa. Bachofen) mit einer Ansatzgröße von 0,5 bis zu 1 Liter in sogenannter Passagenfahrweise. Nach in der Regel 5 Passagen (Durchpumpen der Aufschlämmung durch die Mühle mit Hilfe einer Schlauchpumpe) wurden dabei nach mikroskopischer Auswertung mittlere Teilchengrößen von 0,5 bis 10 µm erreicht.

Anschließend erfolgte die Einarbeitung weiterer Hilfsmitteln gemäß den nachfolgend angegebenen Rezepturen durch 10-minütiges Homogenisieren mit KPG-oder Magnetrührern.

### Herstellungsbeispiel 1.1

Herstellungsvorschrift für ein Metiram DF als Vorprodukt für Öl-SC-Formulierungen

| Rezeptur und Ansatzmengen: | |
|---|---|
| Menge (g) | Inhaltsstoffe |
| 736,00 | Metiram-Filterkuchen ca. 41% wässrig |
| 45,00 | Formaldehyd (37%ig) wässrig |
| 37,50 | Wettol NT 1 |
| 85,71 | Wasser |

Die Metiram-Filterkuchensuspension wurde im Becherglas bei RT mit 45 g Formaldehyd (37%ig) und 37,5 g Wettol NT1 30 min kräftig verrührt. Anschließend wurde mit einer Dynomühle (Ausstattung: 5 Kunststoffscheiben und 510 ml Glasperlenfüllung (Größe 1,4-1,6 mm) bei 20°C unter Wasserkühlung und Temperaturkontrolle in 5 Passagen ein wässriges Metiram-SC hergestellt.

Der gelbe, leicht viskose Austrag wird im Vakuumtrockenschrank bei 40°C 4 Tage lang getrocknet (8 mbar).

Alternativ wurden entsprechend größere Ansätze mittels Sprühtrocknung bei einer Eingangstemperatur von 160°C - 180°C und einer Ausgangstemperatur von 90°C entwässert.

### Analysenwerte:

Ai (Wirkstoff)-Gehalt: 85,98%
ETU (Ethylenthioharnstoff)-Gehalt: 0,06%
Austrag: feinteiliges, homogenes gelbes Pulver
Wassergehalt: < 0,6 Gew.-%

### Herstellungsbeispiel 1.2. Herstellung eines Metiram Öl-SC

| Rezeptur und Ansatzmengen | |
|---|---|
| Menge (g) | Inhaltsstoffe |
| 465 | Metiram-DF-Zwischenprodukt aus Beispiel 1.1 |
| 50 | Solsperse 3000 |
| 459,9 (ad 1 l) | Paraffinöl |

465 g Metiram DF-Zwischenprodukt aus Beispiel 1.1 wurden in eine Mischung aus 459,9 g Paraffinöl und 50 g Solsperse 3.000 mittels Dissolver eingerührt. Die viskose Suspension wurde mittels der Dynomühle von Beispiel 1.1 bei max. 20°C unter Kühlung über 5 Passagen auf eine Korngröße ≤ 2 µm (Anteil > 40 %) vermahlen.

Austrag: ein leicht viskoses Öl-SC mit 400 g/l ai Metiram. In analoger Weise erhielt man die in Tab. 3 genannten Öl-SC-Varianten.

### Beispiel 1

Viskosität von EBDC-Öl-SC-Formulierungen mit Mancozeb als Wirkstoff. Die Zusammensetzung der Formulierungen und die Ergebnisse sind in Tabelle 2 angegeben.

**Tab. 2:**

| Versuch | Inhaltsstoffe 95% Dithane OS + Hilfsmittel (%-Anteil) | | Viskosität (mPa·s) |
|---|---|---|---|
| Vergleich Vergleich | Spraytex-Öl o. Add. 100% Dithane OS | 5 | 205 224 |
| erfindungsgemäß | Solsperse 3000 | 5,0 | 373 |
| erfindungsgemäß | Solsperse 9000 | 5,0 | 159 |
| erfindungsgemäß | Cremophor WO CE 5115 | 5,0 | 160 |
| | Cremophor WO CE 5115 und Solsperse 3000 | 2,5 2,5 | 261 |

### Beispiel 2

Die Lagerstabilität der in der Tabelle 3 angegebenen Metiram-Öl-SC-Formulierungen wurde bestimmt. Die Ergebnisse sind ebenfalls in Tab. 3 angegeben.

**Tab. 3:**

| Metiram-Öl-SC-Formulierungen | | | |
|---|---|---|---|
| Bewertung nach Lagerung 4 Wo, 40°C | Rezeptur | Stabilität (Wirkstoffgehalt) | Solvent ad 1 l |
| E:S | 400 g/l Metiram | 96,7% | Spraytex-Öl |
| | 50 g Cremophor WO CE 5115 | | |
| | 50 g Wettol NT 1 | | |
| E:S,R | 400 g/l Metiram | 94,8% | Paraffinöl |
| | 50 g Solsperse 3000 | | |
| | 50 g Wettol NT 1 | | |
| E:S,R | 400 g/l Metiram | 95,7% | Paraffinöl |
| | 50 g Solsperse 9000 | | |
| | 50 g Wettol NT 1 | | |
| E:S,R | 500 g/l Metiram | 96,6% | Paraffinöl |
| | 50 g Solsperse 9000 | | |
| | 50 g Wettol NT 1 | | |
| E:S,R | 500 g/l Metiram | 96% | Paraffinöl |
| | 50 g Solsperse 9000 | | |
| | 50 g Wettol NT 1 | | |
| E:S,R | 400 g/l Metiram | 96% | Paraffinöl |
| | 50 g Solsperse 9000 | | |
| | 100 g Wettol NT 1 | | |
| E:S,R+ | 400 g/l Metiram | 94,9% | Paraffinöl |
| | 100 g Solsperse 9000 | | |
| | 50 g Wettol NT 1 | | |
| V:I,K | 400 g/l Metiram | n.b.G | Paraffinöl |
| | 50 g Alkamuls T/80 | | |
| | 50 g Wettol NT 1 | | |
| V:I,K | 400 g/l Metiram | n.b.G | Paraffinöl |
| | 50 g Solutol HS 15 | | |
| | 50 g Wettol NT 1 | | |
| V:I,K | 400 g/l Metiram | n.b.G | Spraytex-Öl |
| | 50 g Emulan A | | |
| | 50 g Wettol NT 1 | | |
| V:I,K | 400 g/l Metiram | n.b.G | Spraytex-Öl |
| | 50 g Atlas G 1086 | | |
| | 50 g Wettol NT 1 | | |
| V:I,K | 400 g/l Metiram | n.b.G | Spraytex-Öl |
| | 50 g Atlas G 1049 | | |
| | 50 g Wettol NT 1 | | |
| V:I,K | 400 g/l Metiram | n.b.G | Spraytex-Öl |
| | 50 g Lutensol TO3 | | |
| | 50 g Wettol NT 1 | | |
| V:I,K | 400 g/l Metiram | n.b.G | Spraytex-Öl |
| | 50 g Glycerox HE | | |
| | 50 g Wettol NT 1 | | |
| V:I,K | 400 g/l Metiram | n.b.G | Spraytex-Öl |
| | 50 g Glycerox L8 | | |
| | 50 g Wettol NT 1 | | |
| V:I,K | 400 g/l Metiram | n.b.G | Spraytex-Öl |
| | 50 g Emulan EL 36 | | |
| | 50 g Wettol NT 1 | | |
| V:I,K | 400 g/l Metiram | n.b.G | Spraytex-Öl |
| | 50 g Emulan ELP | | |
| | 50 g Wettol NT 1 | | |

Erläuterungen zur rheologischen Bewertung nach 4 Wochen bei 40°C:
- V: = Vergleichsversuch mit:
(I = Instabilität/ungeeignet; K = irreversible Klumpen/Agglomeratbildung)
- E: = Erfindungsgemäße Formulierung mit: (ausgedrückt in Tab. 3 als Wirkstoffgehalt nach Lagerung, bezogen auf Wirkstoffgehalt vor der Lagerung)
(S = verbesserte Wirkstoff-Stabilität, R = verbesserte Rheologie/Viskosität, bzw. relativ gute Thixothropie, R+: sehr flüssig, beste Eigenschaften)
n.b.= nicht bestimmte Werte, allgemein wegen Gasentw. (G) oder ungeeigneter rheologischer Eigenschaften.

Die Vergleichsversuche zeigen, daß die Formulierungen instabil sind und sich Klumpen beziehungsweise Agglomerate bilden. Teilweise treten die Effekte bereits nach einigen Tagen auf.

Die erfindungsgemäßen Formulierungen waren dagegen auch nach vierwöchiger Lagerung homogen und die Aktivität des Wirkstoffs bleibt im wesentlichen erhalten.

### Beispiel 3

Ein Metiram-Öl-SC wurde entsprechend den Herstellungsbeispielen 1.1 und 1.2 aus folgenden Bestandteilen hergestellt:

| | |
|---|---|
| Metiram | 400 g |
| Wettol NT 1 | 50 g |
| Aerosol OT-A Surfactant | 300 g |
| Paraffinöl ad | 1 000 ml |

Das erhaltene Öl-SC hatte geringe Viskosität und war gut zur Herstellung von Tankmixspritzbrühen geeignet.

## Patentansprüche

1. Dithiocarbamat-Flüssigformulierung mit einem Wassergehalt von 0 bis 5 Gew.-%, umfassend:
a) 10 bis 70 Gew.-% mindestens eines Wirkstoffs aus der Klasse der Dithiocarbamate,
b) 10 bis 89 Gew.-%, einer im Wesentlichen wasserfreien Ölphase,
c) 1 bis 40 Gew.-% Polyhydroxystearinsäure oder eines Derivats davon und/oder eines Alkyl- oder Alkenylpolyoletheralkoxylates.
d) 0 bis 40 Gew.-% mindestens eines anionischen Tensids.

2. Flüssigformulierung nach Anspruch 1, wobei das Dithiocarbamat ausgewählt ist aus der Gruppe, bestehend aus Ziram, Tiram, Metham und den Verbindungen gemäß der nachfolgenden Formel II 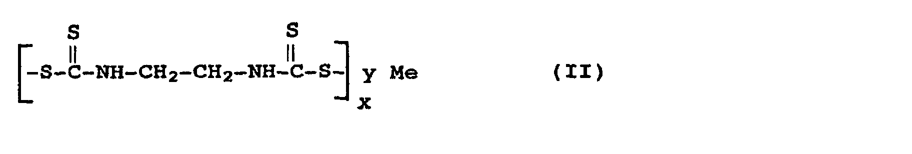 wobei:
Me ein ein- oder zweiwertiges landwirtschaftlich nutzbares Metallion ist, 1 ≤ x ≤ 4 ist, und y je nach Wertigkeit von Me für 1 oder 2 steht.

3. Flüssigformulierung nach einem der Ansprüche 1 oder 2, wobei der Wirkstoff ausgewählt ist aus Mancozeb und Metiram.

4. Flüssigformulierung nach einem der vorhergehenden Ansprüche, wobei die Komponente b) mindestens einen der folgenden Bestandteile enthält:
ba) einen C₈- bis C₃₀-Kohlenwasserstoff der n- oder iso-Alkan-Reihe oder ein Gemisch davon,
bb) einen aromatischen oder cycloaliphatischen C₇- bis C₁₈-Kohlenwasserstoff oder ein Gemisch davon,
bc) einen aliphatischen Ester.

5. Flüssigformulierung nach Anspruch 4, wobei die Komponente bb) ausgewählt ist aus der Gruppe, bestehend aus Mono-, Di-, Trialkylbenzolen, mono-, di-, trialkylsubstituierten Tetralinen und mono-, di-, trialkylsubstituierten Naphthalinen.

6. Flüssigformulierung nach Anspruch 4, wobei der Bestandteil bc) ausgewählt ist aus der Gruppe, bestehend aus Methyloleat, Adipinsäure-dioctylester, Laurylsäure-octylester, 2-Ethylhexansäure-2-ethylhexylester und Benzoesäureester.

7. Flüssigformulierung nach einem der vorhergehenden Ansprüche, wobei das Hydroxystearinsäurederivat ein Umsetzungsprodukt der Polyhydroxystearinsäure mit einem Polyethylenimin oder einem Mono- oder Di-C₁-C₄-alkyl-amino-C₂-C₄-alkylenamin oder ein mit einer C₁-C₄-Alkylgruppe quaternisiertes Produkt davon ist.

8. Flüssigformulierung nach einem der vorhergehenden Ansprüche, wobei das anionische Tensid d) ausgewählt ist aus
da) der Gruppe, bestehend aus Alkylsulfaten, Alkylsulfonaten, Alkylbenzolsulfaten, Alkylarylsulfonaten, Alkylpolyethoxysulfaten, Alkylphenolpolyethoxysulfaten und α-Olefinsulfonaten, wobei das Kation ein landwirtschaftlich nutzbares ein- oder zweiwertiges Kation ist,
db) Verbindungen der Gruppe der Mono- und/oder Di-C₆-C₃₀-alkylestersulfosuccinate, wobei das Kation ein landwirtschaftlich nutzbares ein- oder zweiwertiges Kation ist,
und/oder
dc) den anionischen Polymeren der nachfolgenden Formel (III) 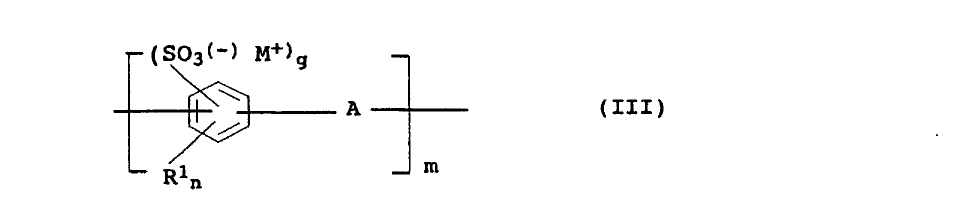 und/oder (IV) 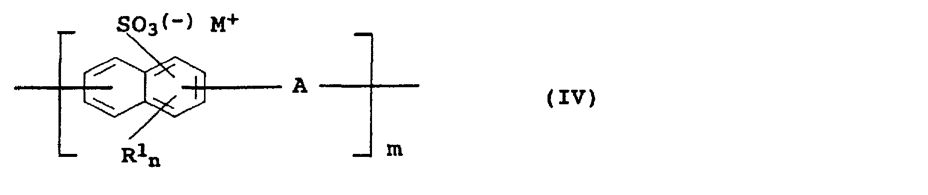
wobei M ein landwirtschaftlich nutzbares ein- oder zweiwertiges Kation ist, g für 0 oder 1 steht, n eine ganze Zahl im Bereich 0 ≤ n ≤ 4, m eine ganze Zahl im Bereich 100 ≤ m ≤ 10⁵ und R¹ ein C₁- bis C₈-Alkylrest oder Hydroxylrest ist und A ein Methylen-, 1,1-Ethylen-, -CH₂-NH-CO-NH-CH₂- oder 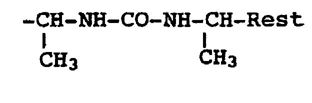 ist.

9. Flüssigformulierung nach Anspruch 8, wobei das anionische Tensid ein Alkylarylsulfonat oder ein anionisches Polymer dc) gemäß Anspruch 8 ist.

10. Flüssigformulierung nach einem der vorhergehenden Ansprüche, umfassend
a) 10 bis 70 Gew.-% eines Wirkstoffs der Formel I 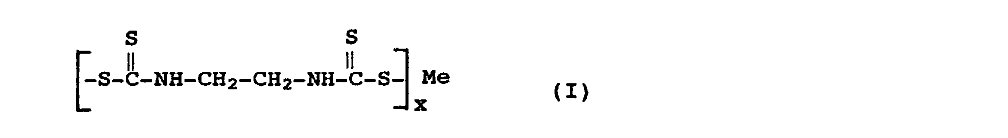 wobei Me = Zn, 1 ≤ x ≤ 5,
b) 10 bis 89 Gew.-% eines C₈-C₃₀-Kohlenwasserstoffes oder eines Gemisches davon,
c) 1 bis 40 Gew.-% Polyhydroxystearinsäure und/oder eines Umsetzungsproduktes der Polyhydroxystearinsäure mit einem Polyethylenimin oder einem Mono- oder Di-C₁-C₄-alkylamino-C₂-C₄-alkylenamin oder ein mit einer C₁-C₄-Alkylgruppe quaternisiertes Produkt davon, und
d) 0,5 bis 20 Gew.-% eines Alkylarylsulfonats oder eines anionischen Polymers dc) gemäß Anspruch 8.

11. Dithiocarbamat-Flüssigformulierung mit einem Wassergehalt von 0 bis 5 Gew.-%, umfassend:
a) 10 bis 70 Gew.-% wenigstens eines Wirkstoffs der nachfolgenden Formel I 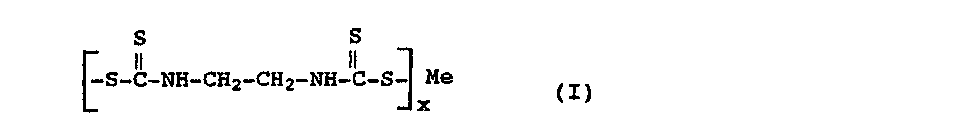 wobei Me = Zn, 1 ≤ x ≤ 5,
b) 10 bis 85 Gew.-%, einer im Wesentlichen wasserfreien Ölphase; und
c) 5 bis 40 Gew.-% mindestens eines anionischen Tensids.
wobei das anionische Tensid c) ausgewählt ist aus
ca) der Gruppe, bestehend aus Alkylsulfaten, Alkylsulfonaten, Alkylbenzolsulfaten, Alkylarylsulfonaten, Alkylpolyethoxysulfaten, Alkylphenolpolyethoxysulfaten und α-Olefinsulfonaten, wobei das Kation ein landwirtschaftlich nutzbares ein- oder zweiwertiges Kation ist,
cb) Verbindungen der Gruppe der Mono- und/oder Di-C₆-C₃₀-alkylestersulfosuccinate, wobei das Kation ein landwirtschaftlich nutzbares ein- oder zweiwertiges Kation ist,
und/oder
cc) den anionischen Polymeren der nachfolgenden Formel (III) 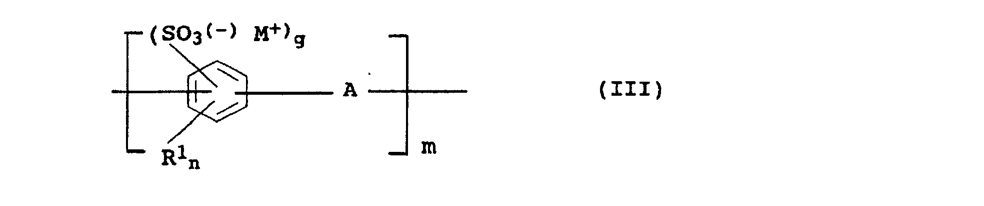
und/oder (IV) 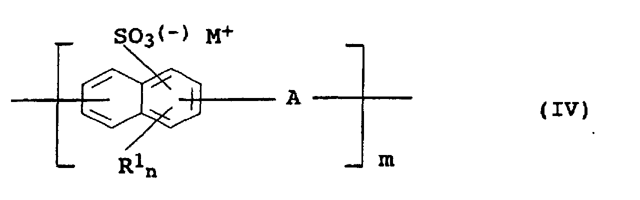
wobei M ein landwirtschaftlich nutzbares ein- oder zweiwertiges Kation ist, g für 0 oder 1 steht, n eine ganze Zahl im Bereich 0 ≤ n ≤ 4, m eine ganze Zahl im Bereich 100 ≤ m ≤ 10⁵ und R¹ ein C₁- bis C₈-Alkylrest oder Hydroxylrest ist und A ein Methylen-, 1,1-Ethylen-, -CH₂-NH-CO-NH-CH₂- oder 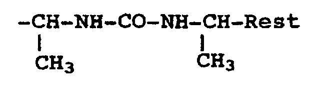 ist.

12. Flüssigformulierung nach Anspruch 11, wobei 3 ≤ x ≤ 4 ist.

13. Verwendung der Formulierung nach einem der Ansprüche 1 bis 12 als Pflanzenschutzmittel.

14. Verwendung nach Anspruch 13, bei der Flugzeug-Applikation.

## Claims

1. Dithiocarbamate liquid formulation having a water content of 0 to 5 % by weight, comprising:
a) 10 to 70% by weight of at least one active ingredient from the class of the dithiocarbamates,
b) 10 to 89% by weight of an essentially anhydrous oil phase,
c) 1 to 40% by weight of polyhydroxystearic acid or a derivative thereof and/or an alkyl or alkenyl polyol ether alkoxylate,
d) 0 to 40% by weight of at least one anionic surfactant.

2. A liquid formulation as claimed in claim 1, where the dithiocarbamate is selected from the group consisting of ziram, tiram, metham and the compounds of the formula II hereinbelow 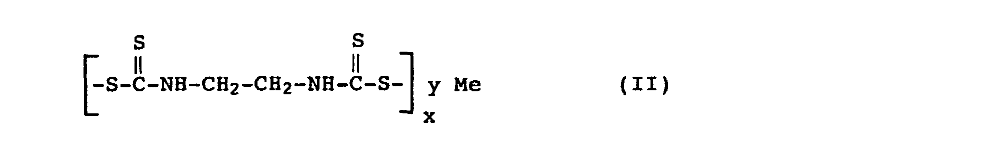 in which:
Me is a mono- or divalent agriculturally utilizable metal ion, 1 ≤ x ≤ 4, and y, depending on the valence of Me, is 1 or 2.

3. A liquid formulation as claimed in claim 1 or 2, where the active ingredient is selected from mancozeb and metiram.

4. A liquid formulation as claimed in any of the preceding claims, wherein component b) comprises at least one of the following components:
ba) a C₈- to C₃₀-hydrocarbon of the n- or iso-alkane series or a mixture thereof,
bb) an aromatic or cycloaliphatic C₇- to C₁₈-hydrocarbon or a mixture thereof,
bc) an aliphatic ester.

5. A liquid formulation as claimed in claim 4, where component bb) is selected from the group consisting of mono-, di-, trialkylbenzenes, mono-, di-, trialkyl-substituted tetralins and mono-, di-, trialkyl-substituted naphthalenes.

6. A liquid formulation as claimed in claim 4, where component bc) is selected from the group consisting of methyl oleate, dioctyl adipate, octyl laurate, 2-ethylhexyl 2-ethylhexanoate and benzoic esters.

7. A liquid formulation as claimed in any of the preceding claims, where the hydroxystearic acid derivative is a reaction product of polyhydroxystearic acid with a polyethylene-imine or a mono- or di-C₁-C₄-alkylamino-C₂-C₄-alkyleneamine or a C₁-C₄-alkyl-quaternized product thereof.

8. A liquid formulation as claimed in any of the preceding claims, where the anionic surfactant d) is selected from
da) the group consisting of alkyl sulfates, alkylsulfonates, alkylbenzene sulfates, alkylarylsulfonates, alkyl polyethoxysulfates, alkylphenol polyethoxysulfates and α-olefinsulfonates, the cation being an agriculturally utilizable mono- or divalent cation,
db) compounds of the group of the mono- and/or di-C₆-C₃₀-alkyl ester sulfosuccinates, the cation being an agriculturally utilizable mono- or divalent cation,
and/or
dc) the anionic polymers of the subsequent formula (III) 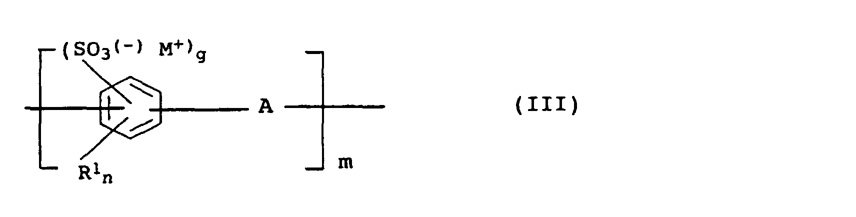 and/or (IV) 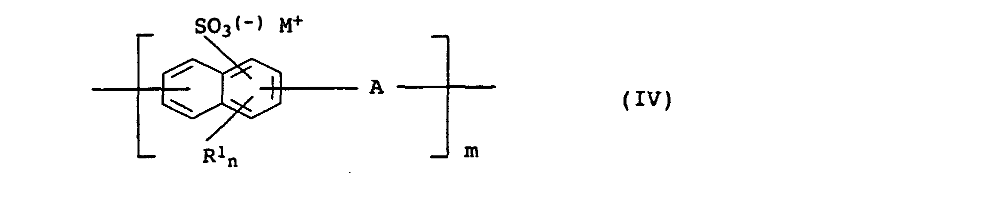
in which M is an agriculturally utilizable mono- or divalent cation, g is 0 or 1, n is an integer in the range 0 ≤ n ≤ 4, m is an integer in the range 100 ≤ m ≤ 10⁵, R¹ is a C₁- to C₈-alkyl radical or hydroxyl radical and A is a methylene, 1,1-ethylene, -CH₂-NH-CO-NH-CH₂- or a 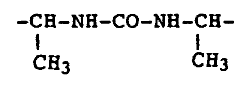 radical.

9. A liquid formulation as claimed in claim 8, where the anionic surfactant is an alkylarylsulfonate or an anionic polymer dc) as claimed in claim 8.

10. A liquid formulation as claimed in any of the preceding claims comprising
a) 10 to 70% by weight of an active ingredient of the formula I 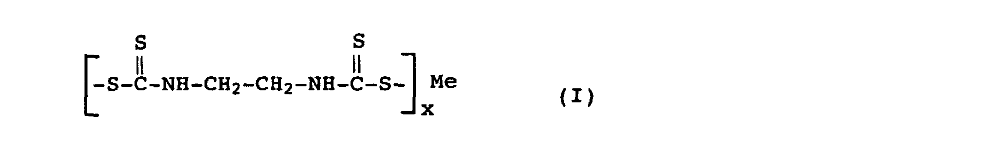 where Me = Zn, 1 ≤ x ≤ 5,
b) 10 to 89% by weight of a C₈-C₃₀-hydrocarbon or a mixture thereof,
c) 1 to 40% by weight of polyhydroxystearic acid and/or a reaction product of polyhydroxystearic acid with a polyethyleneimine or a mono- or di-C₁-C₄-alkylamino-C₂-C₄-alkyleneamine or a C₁-C₄-alkyl-quaternized product thereof, and
d) 0.5 to 20% by weight of an alkylarylsulfonate or an anionic polymer dc) as set forth in claim 8.

11. Dithiocarbamate liquid formulation having a water content of 0 to 5 % by weight, comprising:
a) 10 to 70% by weight of at least one active ingredient of the formula I hereinbelow 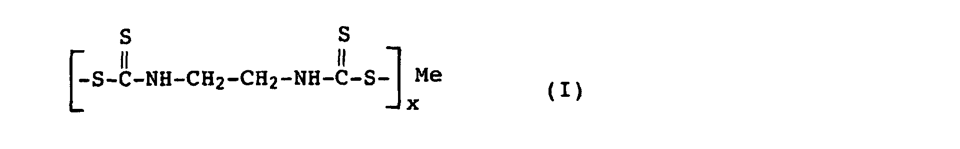 in which Me = Zn, 1 ≤ x ≤ 5,
b) 10 to 85% by weight of an essentially anhydrous oil phase, and
c) 5 to 40% by weight of at least one anionic surfactant,
where the anionic sufactant c) is selected from
ca) the group consisting of alkyl sulfates, alkylsulfonates, alkylbenzene sulfates, alkylarylsulfonates, alkyl polyethoxysulfates, alkylphenol polyethoxysulfates and α-olefinsulfonates, the cation being an agriculturally utilizable mono- or divalent cation,
cb) compounds of the group of the mono- and/or di-C₆-C₃₀-alkyl ester sulfosuccinates, the cation being an agriculturally utilizable mono- or divalent cation,
and/or
cc) the anionic polymers of the subsequent formula (III) 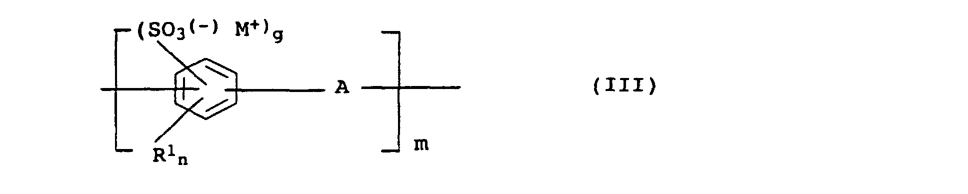 and/or (IV) 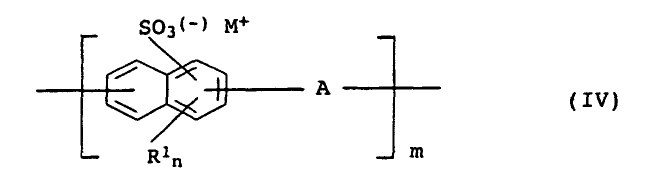
in which M is an agriculturally utilizable mono- or divalent cation, g is 0 or 1, n is an integer in the range 0 ≤ n ≤ 4, m is an integer in the range 100° ≤ m ≤ 10⁵, R¹ is a C₁- to C₈-alkyl radical or hydroxyl radical and A is a methylene, 1,1-ethylene, -CH₂-NH-CO-NH-CH₂- or a 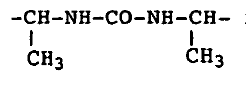 radical.

12. A liquid formulation as claimed in claim 11, where 3 ≤ x ≤ 4.

13. The use of a formulation as claimed in any of claims 1 to 12 as crop protection product.

14. The use as claimed in claim 13 for aerial application.

## Revendications

1. Formulation liquide de dithiocarbamate ayant une teneur en eau de 0 à 5% en poids, comprenant :
a) 10 à 70% en poids d'au moins une substance active de la classe des dithiocarbamates,
b) 10 à 89% en poids d'une phase d'huile essentiellement anhydre,
c) 1 à 40% en poids de poly(acide hydroxystéarique) ou d'un dérivé de celui-ci et/ou d'un alcoxylate d'alkyl- ou d'alcénylpolyol-éther,
d) 0 à 40% en poids d'eau moins un tensio-actif anionique.

2. Formulation liquide selon la revendication 1, dans laquelle le dithiocarbamate est choisi dans le groupe, formé par, ziram, tiram, métam et les composés conformes à la formule suivante II 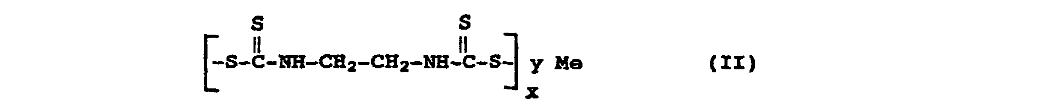 dans laquelle :
Me représente un ion métallique mono ou bivalent exploitable sur le plan agricole, 1 ≤ x < 4, et y représente 1 ou 2 en fonction de la valence de Me.

3. Formulation liquide selon l'une quelconque des revendications 1 ou 2, dans laquelle la substance active est choisie parmi le mancozeb et le métiram.

4. Formulation liquide selon l'une quelconque des revendications précédentes, dans laquelle le composant b) contient au moins un des constituants suivants :
ba) un hydrocarbure en C₈ à C₃₀ de la série des n- ou iso-alcanes, ou un mélange de ceux-ci,
bb) un hydrocarbure aromatique ou cycloaliphatique en C₇ à C₁₈ ou un mélange de ceux-ci,
bc) un ester aliphatique.

5. Formulation liquide selon la revendication 4, dans laquelle le composant bb) est choisi dans le groupe formé par les mono-, di-, tri-alkylbenzènes, les tétralines à substitution mono-, di-, tri-alkyle et les napthalènes à substitution mono-, di-, tri-alkyle.

6. Formulation liquide selon la revendication 4, dans laquelle le constituant bc) est choisi dans le groupe formé par l'oléate de méthyle, l'ester dioctylique d'acide adipique, l'ester octylique de l'acide laurylique, l'ester 2-éthylhexylique de l'acide 2-éthylhexanoïque, et l'ester d'acide benzoïque.

7. Formulation liquide selon l'une quelconque des revendications précédentes, dans laquelle le dérivé d'acide hydroxystéarique est un produit de réaction du poly(acide hydroxystéarique) avec une polyéthylèneimine ou une mono- ou di-(alkyle en C₁ à C₄)-amino-(alkylène en C₂ à C₄)-amine ou un produit quaternisé de celui-ci avec un groupe alkyle en C₁ à C₄.

8. Formulation liquide selon l'une quelconque des revendications précédentes, dans laquelle le tensio-actif anionique d) est choisi
da) dans le groupe formé par les sulfates d'alkyle, les sulfonates d'alkyle, les sulfates d'alkylbenzène, les sulfonates d'alkylaryle, les polyéthoxysulfates d'alkyle, les polyéthoxysulfates d'alkylphénol et les sulfonates d'α-oléfines, le cation étant un cation monovalent ou bivalent, exploitable sur le plan agricole,
db) parmi les composés du groupe des sulfosuccinates de mono-et/ou di-(alkyle en C₆ à C₃₀)-esters, le cation étant un cation monovalent ou bivalent, exploitable sur le plan agricole,
et/ou
dc) parmi les polymères anioniques de formule suivante (III) 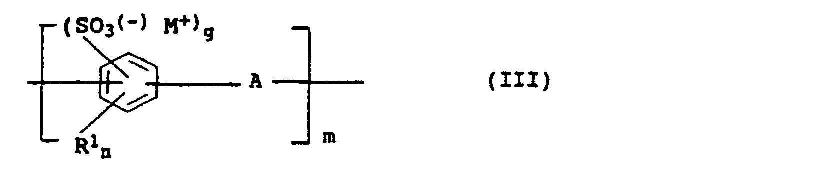 et/ou (IV) 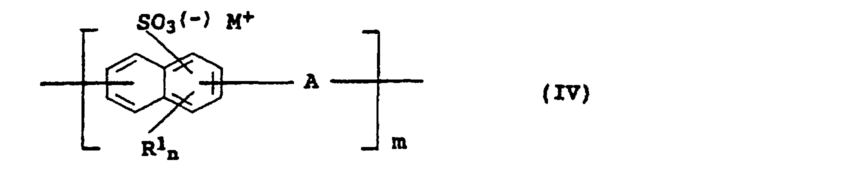
dans lesquelles M est un cation monovalent ou bivalent, exploitable sur le plan agricole, g représente 0 ou 1, n est un nombre entier dans l'intervalle 0 ≤ n ≤ 4, m est un nombre entier dans l'intervalle 100 ≤ m ≤ 10⁵ et R¹ représente un résidu alkyle en C₁ à C₈ ou un résidu hydroxyle et A représente un résidu méthylène, 1,1-éthylène, -CH₂-NH-CO-NH-CH₂- ou

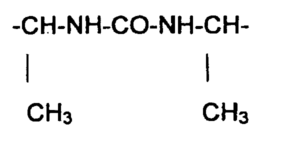

9. Formulation liquide selon la revendication 8, le tensio-actif anionique étant un sulfonate d'alkylaryle ou un polymère anionique dc) selon la revendication 8.

10. Formulation liquide selon l'une quelconque des revendications précédentes, comprenant
a) 10 à 70% en poids d'une substance active de formule I 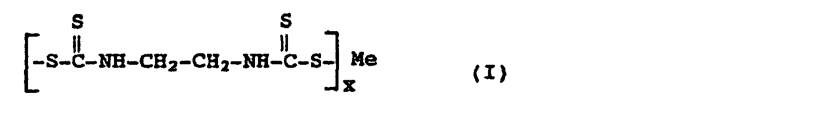 dans laquelle Me = Zn, 1 ≤ x ≤ 5,
b) 10 à 89% en poids d'un hydrocarbure en C₈ à C₃₀ ou d'un mélange de ceux-ci,
c) 1 à 40% en poids de poly(acide hydroxystéarique) et/ou d'un produit de réaction du poly(acide hydroxystéarique) avec une polyéthylèneimine ou une mono- ou di-(alkyle en C₁ à C₄)-amino-(alkylène en C₂ à C₄)-amine ou d'un produit quaternisé de celui-ci avec un groupe alkyle en C₁ à C₄, et
d) 0,5 à 20% en poids d'un sulfonate d'alkylaryle ou d'un polymère anionique dc) selon la revendication 8.

11. Formulation liquide de dithiocarbamate ayant une teneur en eau de 0 à 5% en poids, comprenant :
a) 10 à 70% en poids d'au moins une substance active de formule suivante I 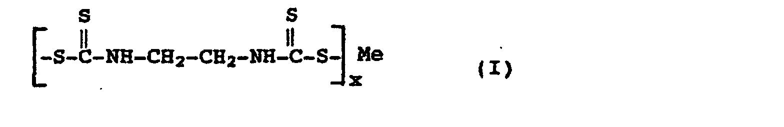 dans laquelle Me = Zn, 1 ≤ x ≤ 5,
b) 10 à 85% en poids d'une phase d'huile essentiellement anhydre; et
c) 5 à 40% en poids d'au moins un tensio-actif anionique,
dans laquelle le tensio-actif anionique c) est choisi
ca) dans le groupe formé par les sulfates d'alkyle, les sulfonates d'alkyle, les sulfates d'alkylbenzène, les sulfonates d'alkylaryle, les polyéthoxysulfates d'alkyle, les polyéthoxysulfates d'alkylphénol, et les sulfonates d'α-oléfines, le cation étant un cation monovalent ou bivalent, exploitable sur le plan agricole,
cb) parmi les composés du groupe des sulfosuccinates de mono-et/ou di-(alkyle en C₆ à C₃₀)-esters, le cation étant un cation monovalent ou bivalent exploitable sur le plan agricole,
et/ou
cc) parmi les polymères anioniques de formule suivante (III) 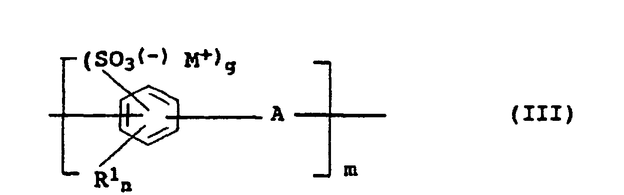
et/ou (IV) 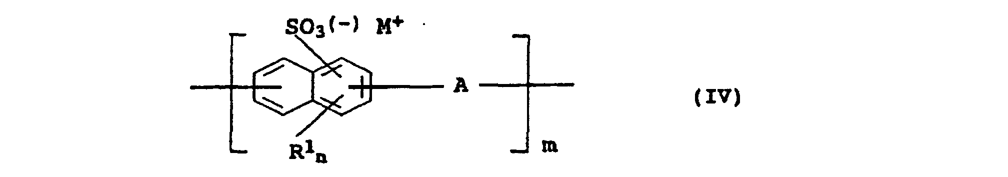 dans lesquelles M est un cation monovalent ou bivalent exploitable sur le plan agricole, g représente 0 ou 1, n est un nombre entier dans l'intervalle 0 ≤ n ≤ 4, m est un nombre entier dans l'intervalle 100 ≤ m ≤ 10⁵ et R¹ représente un résidu alkyle en C₁ à C₈ ou un résidu hydroxyle et A représente un résidu méthylène, 1,1-éthylène, -CH₂-NH-CO-NH-CH₂- ou

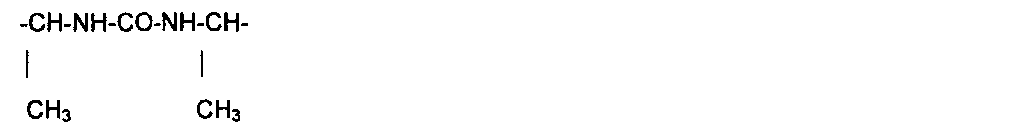

12. Formulation liquide selon la revendication 11, dans laquelle 3 ≤ x ≤ 4.

13. Utilisation de la formulation selon l'une quelconque des revendications 1 à 12, en tant qu'agent phytosanitaire.

14. Utilisation selon la revendication 13, dans l'application par avion.
